# EUROPÄISCHE PATENTSCHRIFT

(11) **EP 1 194 710 B1**
(45) Veröffentlichungstag und Bekanntmachung des Hinweises auf die Patenterteilung: **03.09.2003**
(21) Anmeldenummer: 00945700.3
(22) Anmeldetag: 03.06.2000
(51) Int. Cl.: F16H 61/02

(54) **VERFAHREN ZUR STEUERUNG VON SCHALTVORGÄNGEN BEI EINEM AUTOMATISIERTEN SCHALTGETRIEBE EINES KRAFTFAHRZEUGES**
METHOD FOR CONTROLLING THE SHIFTING OF GEARS IN AN AUTOMATED TRANSMISSION OF A MOTOR VEHICLE
PROCEDE POUR PILOTER DES PROCESSUS DE CHANGEMENT DE VITESSE DANS LA BOITE DE VITESSES AUTOMATISEE D'UNE AUTOMOBILE

(30) Priorität: 21.06.1999 DE 19928374
(43) Veröffentlichungstag der Anmeldung: 10.04.2002
(73) Patentinhaber: Volkswagen Aktiengesellschaft, 38436 Wolfsburg (DE)
(72) Erfinder: RÜDIGER, Reinhard, D-31226 Peine (DE)
(86) Internationale Anmeldenummer: EP0005077
(87) Internationale Veröffentlichungsnummer: WO00079152

(56) Entgegenhaltungen:
- EP-A- 0 114 513
- EP-A- 0 821 188
- DE-A- 4 128 834
- DE-A- 19 506 148

## Beschreibung

Die Erfindung betrifft ein Verfahren zur Steuerung von Schaltvorgängen bei einem automatisierten Schaltgetriebe eines Kraftfahrzeuges nach dem Oberbegriff des Patentanspruches 1.

Im Stand der Technik (DE-A-44 22 427) ist eine Rückwärts-Schaltvorrichtung für ein Kraftfahrzeug-Wechselgetriebe bekannt (DE-A-44 22 427), bei dem ein Teil der Schaltvorrichtung zur Betätigung einer die nachlaufende Getriebewelle abbremsenden Bremsvorrichtung verwendet wird. Bisher ist es im Stand der Technik so, daß bei automatisierten Schaltgetrieben der Fahrer über eine beliebige Sensorik einem Steuergerät bzw. einem Getriebesteuergerät seinen Schaltwunsch oder die von ihm gewünschte Fahrstufe mitteilt und diese Fahrstufe bzw. der entsprechende Gang dann auch automatisch im Getriebe eingelegt wird. Insbesondere wenn der Fahrer den Schalthebel auf die Fahrstufe N stellt, also wenn der Fahrer den Leerlauf einlegt, wird die Kupplung sofort geöffnet, damit die Motorwelle von der Getriebeeingangswelle entkuppelt ist, wobei gleichzeitig das Getriebe in den Getriebeleerlauf geschaltet wird, so daß keine Kraft mehr von der Getriebeeingangswelle auf die Getriebeausgangswelle übertragen werden kann, selbst wenn die Kupplung wieder geschlossen werden würde. Folglich wird der Antriebsstrang durch das Öffnen der Kupplung und durch die Einlegung des Getriebeleerlaufes im Getriebe entsprechend unterbrochen.

Wird nun der Antriebsstrang während der Fahrt des Kraftfahrzeuges, also im Fahrbetrieb des Kraftfahrzeuges, unterbrochen, so wird die Kupplung geöffnet und der Leerlauf im Getriebe eingelegt. Hierbei dreht sich die Getriebeeingangswelle entsprechend weiter und läuft bis zu ihrem Stillstand aufgrund der in den entsprechenden Lagereinheiten vorgesehenen Eigenreibung herunter. Dies hat zur Folge, daß ein nicht synchronisierter Gang, insbesondere der Rückwärtsgang nicht eingelegt werden kann, sondern erst eingelegt werden kann, wenn die Getriebeeingangswelle steht. Einerseits könnte man zwar diesen Zustand abwarten, was mehrere Sekunden dauern kann oder aber - wie es bisher im Stand der Technik üblich ist - man erzwingt mit anderen aufwendigen konstruktiven Maßnahmen ein Abbremsen der Getriebeeingangswelle, wie beispielsweise durch den Einbau einer separaten im Getriebe vorgesehenen Getriebeeingangswellen-Bremse oder durch vorsichtiges Ansynchronisieren bzw. Einlegen eines synchronisierten Ganges mit entsprechend im Getriebe vorgesehenen Synchronisationsvorrichtungen oder - wie bei der DE-A-44 22 427 - es ist eine bestimmte Schaltvorrichtung mit einer Servoeinrichtung vorgesehen, die eine auf die nachlaufende Getriebewelle einwirkende Bremsvorrichtung entsprechend betätigt.

Weiterhin ist im Stand der Technik ein Verfahren zur Steuerung von Schaltvorgängen nach dem Oberbegriff des Patentanspruch 5 bekannt (EP 0 821 188), bei dem die Umschaltung des Fahrbetriebs von "Vorwärts" nach "Rückwärts" wie folgt realisiert wird: Zunächst wird das Kraftfahrzeug aus dem Fahrzustand "Vorwärts" abgebremst, wobei die Kupplung nach einer anfänglichen Bremszeit bzw. dem Beginn des Bremsvorganges vollständig geöffnet wird. Dann wird das Kraftfahrzeug so lange weiter abgebremst, bis das Kraftfahrzeug noch eine - wenn auch geringe - Vorwärtsgeschwindigkeit aufweist. Noch während der anliegenden existenten Vorwärtsgeschwindigkeit wird dann zur Realisierung der Rückwärtsgangschaltung innerhalb des Getriebes die entsprechende Getriebe-Synchronisierung aktiviert. Hierzu wird dann der Leerlauf innerhalb des Getriebes eingelegt noch während das Kraftfahrzeug eine bestimmte Vorwärtsgeschwindigkeit aufweist. Folglich sind hier die Getriebe-Synchronisierungen entsprechend konstruktiv bzw. entsprechend komplex ausgelegt, damit das Einlegen des Rückwärtsganges auch problemlos realisierbar ist, so daß auch der Steuerungsaufwand sehr hoch bzw. die hierzu notwendigen Komponenten sehr kostenintensiv sind.

Im Ergebnis sind die bisher im Stand der Technik bekannten, konstruktiven Maßnahmen zum Abbremsen einer nachlaufenden Getriebeeingangswelle konstruktiv sehr aufwendig, teuer und erfordern manchmal hohe Verzögerungszeiten und zusätzliche Geräusche beim Schalten bzw. Einlegen der Gänge bzw. Fahrstufen im Getriebe.

Der Erfindung liegt daher die Aufgabe zugrunde, das eingangs genannte Verfahren bzw. die eingangs genannte Einrichtung derart auszugestalten und weiterzubilden, daß der mit dem Steuerungsaufwand verbundene Kostenaufwand verringert ist.

Die zuvor gezeigte Aufgabe ist durch die Maßnahmen des Verfahrensanspruchs 1 gelöst.

Wenn nun der Fahrer den Schalthebel entsprechend betätigt, d.h. den Schalthebel in die Leerlaufposition (Fahrstufe N) oder den Schalthebel in die Position für den Rückwärtsgang (R) fährt bzw. entsprechend betätigt, wird nunmehr zwar sofort die Kupplung geöffnet, so daß der Antriebsstrang zwischen Motor und Getriebe unterbrochen ist, aber der Getriebeleerlauf im Getriebe selbst wird nicht sofort eingelegt, so daß die Getriebeeingangswelle nach wie vor noch mit den Rädern bzw. dem gesamten Abtriebsstrang wirksam verbunden ist. Dies hat zur Folge, daß bei durch den Fahrer mit Hilfe des Schalthebels eingelegter Leerlaufposition oder dann kurz vor Einlegen des Rückwärtsganges der Fahrer natürlich auch das Kraftfahrzeug durch den entsprechenden Bremsvorgang zum Stehen bringt. In dem Moment nun, wo der Fahrbetrieb des Kraftfahrzeuges nicht mehr existiert, also nunmehr der Standbetrieb durch den entsprechenden Sensor ermittelt worden ist, wird vom Steuergerät automatisch dann der Getriebeleerlauf innerhalb des Getriebes eingelegt, damit hiernach der Rückwärtsgang im Getriebe eingelegt werden kann. Diese Getriebesteuerung hat zur Folge, daß die Getriebeeingangswelle, da sie noch mit dem Abtriebsstrang, d.h. den Rädern des Kraftfahrzeuges wirksam verbunden ist und das Kraftfahrzeug natürlich entsprechend abgebremst wird, zum Stillstand kommt, bevor es rückwärts fährt, so daß auch die Getriebeeingangswelle zum Stehen kommt bzw. entsprechend mit abgebremst wird. Folglich ist für diesen Fall keine separate Bremsvorrichtung im Getriebe mehr notwendig, so daß hier die konstruktiven Maßnahmen verringert sind bzw. hierdurch auch unnötige Kosten vermieden werden können:

Es gibt nun eine Vielzahl von Möglichkeiten, das erfindungsgemäße Verfahren in vorteilhafter Weise auszugestalten und weiterzubilden, wofür auf den dem Patentanspruch 1 nachgeordneten Patentanspruch verwiesen werden darf. Im einzelnen wird nun eine Ausführungsform der Erfindung anhand der folgenden Zeichnung und Beschreibung näher erläutert.

In der Zeichnung zeigt:

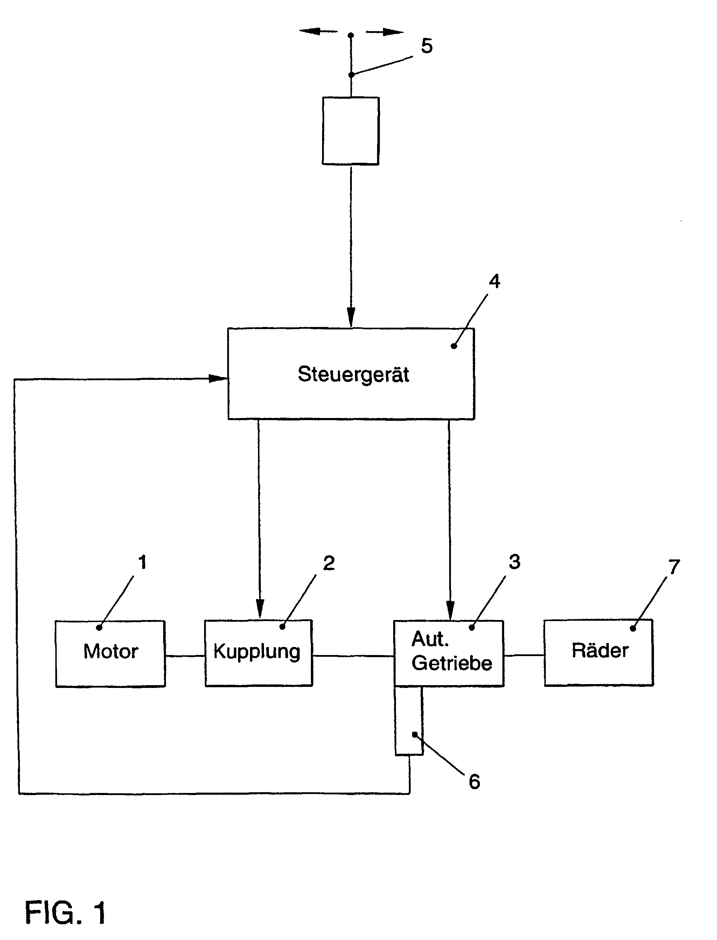

- Fig. 1: in schematischer Darstellung das erfindungsgemäße Verfahren bzw. die erfindungsgemäße Einrichtung zur Steuerung eines automatisierten Schaltgetriebes, insbesondere eines automatisierten Hand-Schaltgetriebes.

Fig. 1 zeigt in stark schematisierter Darstellung ein Verfahren bzw. eine Einrichtung, insbesondere elektronische Schalteinrichtung, zur Steuerung von Schaltvorgängen bei einem automatisierten Schaltgetriebe, hier einem automatisierten Hand-Schaltgetriebe 3 eines Kraftfahrzeuges. Hierbei ist der Motor 1 des nicht dargestellten Kraftfahrzeuges über eine Kupplung 2 mit der Getriebeeingangswelle des Getriebes 3 verbindbar. Für die Realisierung der Schaltvorgänge und/oder der unterschiedlichen Fahrstufen ist ein Steuergerät 4 und ein im Fahrgastraum angeordneter, vzw. elektronischer Schalthebel 5 vorgesehen. Der Schalthebel 5 kann nun durch den Fahrer entsprechend bedient bzw. betätigt werden, so daß durch den Schalthebel 5 der Leerlauf (Fahrstufe N) und/oder ein anderer Gang für einen Getriebe-Gangwechsel entsprechend eingelegt wird. Dies hat bei entsprechender Betätigung des Schalthebels 5 zur Folge, daß die Kupplung 2 geöffnet wird und die Getriebeeingangswelle des Getriebes 3 von der Motorwelle des Motors 1 entkuppelt wird. Weiterhin ist auch das Getriebe 3 - wie bisher im Stand der Technik üblich - auch in einen entsprechenden Getriebeleerlauf schaltbar, um nämlich den Wechsel der Getriebe-Gänge entsprechend realisieren zu können. Anders ausgedrückt: Die Getriebeeingangswelle ist von der Getriebeabtriebswelle durch innerhalb des Getriebes 3 vorgesehene Einrichtungen wirksam entkuppelbar, so daß darin der Getriebeleerlauf eingeschaltet ist. Weiterhin ist der Fahrzustand des Kraftfahrzeuges (Fahrbetrieb oder Standbetrieb) ermittelbar, es ist also ermittelbar, ob sich das Kraftfahrzeug bewegt oder ob es still steht. Hierzu ist ein mit dem Steuergerät 4 schaltungstechnisch verbundener Sensor 6 vorgesehen, der an ganz unterschiedlichen Positionen angeordnet werden kann, was im folgenden aber noch erläutert werden wird.

Die eingangs beschriebenen Nachteile, d.h. die bisher im Stand der Technik aufwendigen konstruktiven Maßnahmen zum Abbremsen einer nachlaufenden Getriebewelle und die damit verbundenen Kosten sind nun dadurch verringert, daß im Fahrbetrieb des Kraftfahrzeuges, also bei fahrendem Kraftfahrzeug, beim Einlegen des Leerlaufes durch die Fahrstufe N oder bei Einlegen des Rückwärtsganges durch die Fahrstufe R durch den Schalthebel 5 zunächst nur die Kupplung 2 geöffnet wird, so daß die Getriebeeingangswelle - auch nach dem Öffnen der Kupplung 2 - immer noch mit den Rädern 7 des Kraftfahrzeuges wirksam verbunden ist.

Durch die Einrichtung werden die eingangs beschriebenen Nachteile dadurch vermieden, daß bei der Ermittlung des Fahrbetriebs durch den Sensor 6, also bei fahrendem Kraftfahrzeug und bei Betätigung des Schalthebels 5 in die Leerlaufposition (Fahrstufe N) oder bei der Betätigung des Schalthebels 5 in die Position zum Einlegen des Rückwärtsganges (R) durch das Steuergerät 4 zunächst nur die Kupplung 2 in den geöffneten, also von der Getriebeeingangswelle enkuppelten Zustand fahrbar ist, so daß die Getriebeeingangswelle - auch bei geöffneter Kupplung 2 - immer noch mit den Rädern 7 des Kraftfahrzeuges wirksam verbunden ist, bis der Standbetrieb des Kraftfahrzeuges erreicht ist.

Steuerungstechnisch hat dies den Vorteil, daß die Getriebeeingangswelle, wenn der Leerlauf (N) oder sogar der Rückwärtsgang (R) durch den Schalthebel 5 bereits eingelegt ist, mit Hilfe der Räder 7, d.h. mit Hilfe des Abtriebsstranges des Kraftfahrzeuges ebenfalls abgebremst wird, so daß ein Nachlaufen der Getriebeeingangswelle nicht nur vermieden ist, sondern die Getriebeeingangswelle zum Stehen kommt, wenn auch das Kraftfahrzeug steht. Erst dann im Standbetrieb des Kraftfahrzeug wird der Getriebeleerlauf im Getriebe 3 selbst, also bei stehendem Kraftfahrzeug, eingelegt, so daß hiernach dann auch der Rückwärtsgang im Getriebe 3, nämlich nach dem . Einlegen des Getriebeleerlaufes eingelegt werden kann. Dies hat den Vorteil, daß, wenn das Kraftfahrzeug steht, auch die Getriebeeingangswelle steht und ein nicht synchronisierter Gang, nämlich der Rückwärtsgang, sofort innerhalb des Getriebes 3 eingelegt werden kann. Auf den Einbau einer mechanischen Bremse im Getriebe 3 kann verzichtet werden. Auch eine Synchronisierung bzw. eine Synchronisierungs-Vorrichtung, um ein Einlegen des Rückwärtsganges - wie bisher im Stand der Technik üblich - zu realisieren, ist nicht mehr notwendig.

Damit nun das Steuergerät 4 den Steuerungsvorgang realisieren kann, wird über den Sensor 6, der als induktiver Sensor ausgeführt und im Bereich der Getriebeeingangswelle zur Ermittlung der Wellendrehzahl bzw. der Drehgeschwindigkeit der Getriebeeingangswelle angeordnet ist, ermittelt, ob das Kraftfahrzeug sich im Fahrbetrieb oder im Standbetrieb befindet. Befindet sich das Fahrzeug im Fahrbetrieb, so wird bei der Betätigung des Schalthebels 5 durch den Fahrer in die Leerlaufposition (Fahrstufe N) oder bei der Betätigung des Schalthebels 5 durch den Fahrer in die Position zum Einlegen des Rückwärtsganges (R) durch das Steuergerät 4 zunächst nur die Kupplung 2 in den geöffneten, also von der Getriebeeingangswelle entkuppelten Zustand gefahren, so daß die Getriebeeingangswelle - auch bei geöffneter Kupplung - immer noch mit den Rädern 7 des Kräftfahrzeuges wirksam verbunden ist. Da die Getriebeeingangswelle nach wie vor immer noch mit den Rädern 7 des Kraftfahrzeuges verbunden ist, kann sie mit Hilfe dieses "Abtriebsstranges" auch entsprechend abgebremst werden, wenn nämlich das Kraftfahrzeug ebenfalls abgebremst wird, so daß ein Nachlaufen der Getriebeeingangswelle vermieden wird.

Das Steuergerät 4 schaltet erst den Getriebeleerlauf im Getriebe 3 ein, wenn das Kraftfahrzeug steht, also wenn der Sensor 6 dies entsprechend dem Steuergerät 4 signalisiert. So kann danach, bei entsprechend vorheriger Betätigung des Schalthebels 5 der Rückwärtsgang im Getriebe 3, also erst nach dem Einlegen des Getriebeleerlaufes eingelegt bzw. eingeschaltet werden.

Der Sensor 6 könnte bspw. im Bereich der Getriebeabtriebswelle vorgesehen sein. Wichtig ist, daß ein Sensor vorgesehen ist, der die Fahrgeschwindigkeit des Kraftfahrzeuges ermittelt, also den Fahr- und/oder Standbetrieb ermitteln kann.

Zur Vereinfachung der Darstellung sind einige, insbesondere schaltungtechnische Elemente nicht dargestellt. So kann bspw. das Getriebe 3 von einem seperaten nicht dargestellten Getriebesteuergerät entsprechend gesteuert werden. Die entsprechende Realisierung liegt im Ermessen des Durchschnittsfachmannes.

Im Ergebnis werden durch das erfindungsgemäße Verfahren die konstruktiven Maßnahmen bei einem automatisierten Schaltgetriebe zum Abbremsen der Getriebeeingangswelle vermindert.

### BEZUGSZEICHENLISTE

- 1: Motor
- 2: Kupplung
- 3: Getriebe
- 4: Steuergerät
- 5: Schalthebel
- 6: Sensor
- 7: Räder

## Patentansprüche

1. Verfahren zur Steuerung von Schaltvorgängen bei einem automatisierten Schaltgetriebe eines Kraftfahrzeuges, wobei der Motor (1) des Kraftfahrzeuges über eine Kupplung (2) mit der Getriebeeingangswelle verbindbar ist, wobei für die Realisierung der Schaltvorgänge und/oder der unterschiedlichen Fahrstufen eine aktuatorbetätigbare Schalt- und Wählvorrichtung zur Betätigung einer Getriebeschaltwelle am Getriebe (3) angeordnet ist, wobei ein Steuergerät (4) und ein Im Fahrgastraum angeordneter Schalthebel (5) vorgesehen sind, wobei bei entsprechender Bedienung des Schalthebels (5) durch den Fahrer beim Einlegen des Leerlaufes durch die Fahrstufe N oder bei einem Getriebe-Gangwechsel oder sowohl beim Einlegen des Leerlaufes durch die Fahrstufe N als auch bei einem Getriebe - Gangwechsel die Kupplung (2) geöffnet und die Getriebeeingangswelle von der Motorwelle entkuppelt wird, wobei das Getriebe (3) in einen Getriebeleerlauf schaltbar ist und der Fahrzustand des Kraftfahrzeuges, Fahrbetrieb oder Standbetrieb, ermittelt wird, wobei im Fahrbetrieb des Kraftfahrzeuges, also bei fahrendem Kraftfahrzeug beim Einlegen des Leerlaufes oder beim Einlegen des Rückwärtsganges durch den Schalthebel (5) zunächst die Kupplung (2) geöffnet wird und vor Einlegung des Rückwärtsganges das Kraftfahrzeug abgebremst wird, **dadurch gekennzeichnet, daß** die Getriebeeingangswelle - auch nach dem Öffnen der Kupplung (2) - immer noch solange mit den Rädern (7) des Kraftfahrzeuges antriebswirksam verbunden ist, bis daß der Standbetrieb des Kraftfahrzeuges erreicht ist, daß erst im Standbetrieb des Kraftfahrzeuges - also bei stehendem Fahrzeug - der Getriebeleerlauf im Getriebe (3) mit Hilfe des Steuergerätes (4) eingelegt wird und hiernach dann der Rückwärtsgang im Getriebe (3) eingelegt wird.

2. Verfahren nach Anspruch 1, **dadurch gekennzeichnet, daß** die Drehgeschwindigkeit bzw. die Drehzahl der Getriebeeingangswelle gemessen wird.

## Claims

1. Method for the control of shifting operations in an automated shift transmission of a motor vehicle, the engine (1) of the motor vehicle being connectable to the transmission input shaft via a clutch (2), an actuator-actuable shifting and selecting device for actuating a transmission shift shaft being arranged on the transmission (3) for executing the shifting operations and/or the different driving steps, a control apparatus (4) and a shift lever (5) arranged in the passenger space being provided, and, in the case of appropriate operation of the shift lever (5) by the driver for the selection of idling by means of the driving step N or for a transmission gear change or both for the selection of idling by means of the driving step N and for a transmission gear change, the clutch (2) being opened and the transmission input shaft being uncoupled from the engine shaft, the transmission (3) being shiftable into transmission idling and the driving state of the motor vehicle, driving mode or stationary mode, being determined, and, in the driving mode of the motor vehicle, that is to say with the motor vehicle driving along, during the selection of idling or during the selection of reverse gear by means of the shift lever (5), first the clutch (2) being opened and, before the selection of reverse gear, the motor vehicle being braked, **characterized in that** the transmission input shaft, even after the opening of the clutch (2), is still connected with a drive effect to the wheels (7) of the motor vehicle until the stationary mode of the motor vehicle is assumed, and **in that**, first, in the stationary mode of the motor vehicle, that is to say with the vehicle at a standstill, transmission idling is selected in the transmission (3) with the aid of the control apparatus (4) and, thereafter, reverse gear is then selected in the transmission (3).

2. Method according to Claim 1, **characterized in that** the rotational speed or the number of revolutions of the transmission input shaft is measured.

## Revendications

1. Procédé de commande d'opérations de changement de vitesses dans une boîte de vitesses automatisée d'un véhicule automobile, le moteur (1) du véhicule automobile pouvant être raccordé par le biais d'un embrayage (2) à l'arbre d'entrée de boîte de vitesses, un dispositif de changement de vitesses et de sélection pouvant être actionné par un actionneur étant disposé sur la boîte de vitesses (3) pour la réalisation des opérations de changement de vitesses et/ou des différents rapports de marche, un dispositif de commande (4) et un levier de sélection (5) disposé dans un habitacle de conduite étant prévus, l'embrayage (2) étant ouvert et l'arbre d'entrée de boîte de vitesses étant désaccouplé de l'arbre du moteur lors d'un actionnement correspondant du levier de sélection (5) par le conducteur lors de l'enclenchement de la marche à vide par le rapport de marche N ou lors d'un changement de vitesse de la boîte de vitesses ou également lors de l'enclenchement de la marche à vide par le rapport de marche N ainsi qu'également lors d'un changement de vitesses de la boîte de vitesses, la boîte de vitesses (3) pouvant être commutée dans une marche à vide de la boîte de vitesses et l'état de marche du véhicule automobile, le fonctionnement de conduite ou le fonctionnement à l'arrêt étant déterminé, lors du fonctionnement de conduite du véhicule automobile, c'est-à-dire lorsque le véhicule automobile roule, lors de l'enclenchement de la marche à vide ou lors de l'enclenchement de la marche arrière par le levier de sélection (5), l'embrayage (2) étant d'abord ouvert, et avant l'enclenchement de la marche arrière, le véhicule automobile étant freiné, **caractérisé en ce que** l'arbre d'entrée de boîte de vitesses - également après l'ouverture de l'embrayage (2) - est toujours encore raccordé aux roues (7) du véhicule automobile de manière à fournir un entraînement tant que le fonctionnement à l'arrêt du véhicule n'a pas été atteint, **en ce que** seulement pendant le fonctionnement à l'arrêt du véhicule - c'est-à-dire lorsque le véhicule est immobile - la marche à vide de la boîte de vitesses est enclenchée dans la boîte de vitesses (3) à l'aide du dispositif de commande (4) puis la marche arrière est alors enclenchée dans la boîte de vitesses (3) .

2. Procédé selon la revendication 1, **caractérisé en ce que** l'on mesure la vitesse de rotation ou le régime de l'arbre d'entrée de boîte de vitesses.
